(19) Europäisches Patentamt
European Patent Office
Office européen des brevets

(11) **EP 2 165 858 B1**

(12) **EUROPÄISCHE PATENTSCHRIFT**

(45) Veröffentlichungstag und Bekanntmachung des Hinweises auf die Patenterteilung:
**03.08.2011  Patentblatt 2011/31**

(51) Int Cl.:
***B60C 11/12*** *(2006.01)*

(21) Anmeldenummer: **09160114.6**

(22) Anmeldetag: **07.11.2006**

(54) **Laufstreifenprofil**

Run strip profile

Profil de bande de roulement

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.12.2005  DE 102005061118**

(43) Veröffentlichungstag der Anmeldung:
**24.03.2010  Patentblatt 2010/12**

(62) Dokumentnummer(n) der früheren Anmeldung(en) nach Art. 76 EPÜ:
**06123560.2 / 1 798 066**

(73) Patentinhaber: **Continental Reifen Deutschland GmbH**
**30165 Hannover (DE)**

(72) Erfinder:
• **Diensthuber, Franz**
  **30559 Hannover (DE)**
• **Heine, Stefan**
  **30163 Hannover (DE)**
• **Celik, Akif**
  **30173 Hannover (DE)**

(74) Vertreter: **Finger, Karsten et al**
**Continental Aktiengesellschaft**
**Patente und Lizenzen**
**Postfach 1 69**
**30001 Hannover (DE)**

(56) Entgegenhaltungen:
**EP-A- 0 718 125    EP-A- 0 968 849**
**EP-A- 0 968 850**

**Beschreibung**

Die Erfindung betrifft ein Laufstreifenprofil eines Fahrzeugluftreifens - insbesondere eines Winterreifens - mit wenigstens einer über den Umfang des Fahrzeugluftreifens erstreckten Profilblockreihe mit in Umfangsrichtung U hintereinander angeordneten, jeweils durch Querrillen voneinander getrennten Profilblockelementen, mit einem in der radial äußeren Oberfläche von Profilblockelementen der Profilblockreihe ausgebildeten gitterförmigen Feineinschnittsystem.

Es sind Laufstreifenprofile von Winterreifen bekannt mit über den Umfang des Fahrzeugluftreifens erstreckten Profilblockreihen mit in Umfangsrichtung U hintereinander angeordneten, jeweils durch Querrillen voneinander getrennten Profilblockelementen mit in der radial äußeren Oberfläche von Profilblockelementen der Profilblockreihe ausgebildeten parallelen geradlinigen oder sinusförmig gewellten Feineinschnitten. Diese Ausbildung ermöglichen durch eine sehr begrenzte Zahl von parallelen Feineinschnitte Griffkanten für guten Schneegriff und Flexibilität des Profilblockes hauptsächlich in eine Richtung.

Darüber hinaus sind Laufstreifenprofile von Winterreifen bekannt mit über den Umfang des Fahrzeugluftreifens erstreckten Profilblockreihen mit in Umfangsrichtung U hintereinander angeordneten, jeweils durch Querrillen voneinander getrennten Profilblockelementen, bei denen in der radial äußeren Oberfläche der Profilblockelemente gitterförmigen Feineinschnittsysteme ausgebildet sind, die sich jeweils über das gesamte Profilblockelement erstrecken.

Derartige gitterförmige Feineinschnittsysteme sind üblicherweise durch ein System sich in viele Richtungen gegenseitig abstützender vom Gitter unterteilten Profilelementabschnitte ausgebildet. Ein derartiges Laufstreifenprofil mit gitterförmigem Feineinschnittsystem ist beispielsweise aus der DE19829038C2 bekannt. Dieses Feineinschnittsystem ermöglicht viele, dicht beieinander liegende Griffkanten sowohl in Umfangs- als auch in Seitenrichtung und somit guten Schneegriff. Die gegenseitige Abstützung in unterschiedlichste Richtungen führt zu hoher Stetigkeit, der Profilblockelemente, die gute Handling-Eigenschaften auf trockener Straße begünstigen. Die Feineinschnittgitter ermöglichen eine hohe Griffkantenzahl und eine hohe Flexibilität der vom Feineinschnittgitter jeweils umrahmten Profilblockausschnittselemente für einen guten Schneegriff in Längs- und in Querrichtung, Die durch diese Feineinschnittsgitter bewirkte hohe Flexibilität des gesamten Profilblockelements kann jedoch zu erhöhter Klotzverformung fuhren, wodurch Trockeneigenschaften wie z.B. Traktions-, Handling- und auch Aquaplaningeigenschaften noch eingeschränkt werden können.

Aus der EP-A-0718125 ist ein Laufstreifenprofil eines Fahrzeugluftreifens gemäß den Merlanalen des Oberbegriffs des Anspruchs 1 bekannt.

Der Erfindung liegt daher die Aufgabe zugrunde, ein Laufstreifenprofil eines Fahrzeugluftreifens - insbesondere eines Winterreifens - mit wenigstens einer über den Umfang des Fahrzeugluftreifens erstreckten Profilblockreihe mit in Umfangsrichtung U hintereinander angeordneten, jeweils durch Querrillen voneinander getrennten Profilblockelementen, mit einem in der radial äußeren Oberfläche von Profilblockelementen der Profilblockreihe ausgebildeten gitterförmigen Feineinschnittsystem, zu schaffen, bei dem bei guten Schneegriffeigenschaften auch gute Trockeneigenschaften des Fahrzeugreifens ermöglicht werden.

Die Erfindung wird durch die Ausbildung eines Laufstreifenprofils eines Fahrzeugluftreifens - insbesondere eines Winterreifens - mit wenigstens einer über den Umfang des Fahrzeugluftreifens erstreckten Profilblockreihe mit in Umfangsrichtung U hintereinander angeordneten, jeweils durch Querrillen voneinander getrennten Profilblockelementen, mit einem in der radial äußeren Oberfläche von Profilblockelementen der Profilblockreihe ausgebildeten gitterförmigen Feineinschnittsystem, gemäß den Merkmalen von Anspruch 1 gelöst , wobei ein oder mehrere der Profilblokkelemente einer Profilblockrehe in ihrer radial äußeren Oberfläche mit mehreren - insbesondere mit zwei - in Umfangsrichtung hintereinander angeordnet und von einander beabstandeten gitterförmigen Feineinschnittsystemen ausgebildet sind, mit jeweils einer in Umfangsrichtung zwischen den hintereinander angeordneten gitterförmigen Feineinschnittsystemen ausgebildeten Zone, die sich axial längs der Erstreckung der gitterförmigen Feineinschnittsysteme über die gesamte axiale Erstreckung der gitterförmigen Feineinschnittsysteme im Profilblockelement über einen in Umfangsrichtung gemessenen Abstand $w_3$ mit $w_3 > 0$ mm hin erstrecken, der frei von Feineinschnitten ausgebildet ist. Hierdurch kann der Zielkonflikt aus guten Handlingeigenschaften, Trockenbremsen und guten Wintereigenschaften besser gelöst werden. Die Feineinschnittgitter ermöglichen eine hohe Zahl und Dichte von Griffkanten und hohe Flexibilität der durch das Feineinschnittgitter umrahmten Profilblockausschnittelemente und somit sicheren Griff auf Schnee und schneeähnlichem Untergrund sowohl in axialer als auch in Umfangsrichtung des Fahrzeugluftreifens. Das Profilblockelement ist zwischen den Feineinschnitten zusätzlich versteift, wodurch die Trockeneigenschaften verbessert werden. Zwischen dem Versteifungsbereich und den Feineinschnittgittem sind zusätzlich wirksame Griffkanten bei hoher Steifigkeit und sicheren Aufnahmeöffnungen zur Aufnahme von Schnee gebildet. Wodurch die Schneeeigenschaften zusätzlich verbessert werden. Somit werden bei verbesserten Schneeeigenschaften auch die Trockengriffeigenschaften verbessert.

Bevorzugt ist die Ausbildung gemäß den Merkmalen von Anspruch 2, wobei die von einander beabstandeten gitterförmigen Feineinschnittsystem aus mehreren geradlinigen, zu einander parallelen ersten Feineinschnitten und aus diese ersten Feineinschnitte mit einander verbindenden zweiten Feineinschnitten ausgebildet ist, wobei die geradlinigen, parallelen ersten Feineinschnitte in ihrer Ausrichtung mit ihrer größten Richtungskomponente in Umfangsrichtung des Fahrzeugluftreifens ausgebildet sind. Die Geradlinigen ersten Feineinschnitte ermöglichen in geringem Umfang ein Aneinandervorbeigleiten der von ihnen getrennten Profilelementabschnitte im Feineinschnittgitter entlang des jeweiligen ersten Feineinschnitts, wodurch die weiteren Feineinschnitte im Reifenlatsch stärker geöffnet werden. Das Eindringen von Schnee, Matsch oder sonstigem weichem Untergrundmaterial in die weiteren Feineinschnitte wird erleichtert und somit die Schnee-Schneereibung verbessert. Die Hauptausrichtungskomponente der ersten Feineinschnitte in Umfangsrichtung ermöglicht somit ein Gleiten hauptsächlich in Umfangsrichtung. Die erforderliche Quersteifigkeit für gute Handlingeigenschaften auf trockenem Untergrund kann aufrechterhalten werden.

Bevorzugt ist die Ausbildung gemäß den Merkmalen von Anspruch 3, wobei zwei in Erstreckungsrichtung der ersten Feineinschnitte des Profilblockelementes gesehen benachbarte zweite Feineinschnitte in Erstreckungsrichtung der ersten Feineinschnitte gemessen jeweils einen Abstand $k_2$ zu einander aufweisen.

Bevorzugt ist die Ausbildung gemäß den Merkmalen von Anspruch 4, wobei für $w_3$ gilt:

$$(1{,}15\ k_2) \le w_3 \ \le (1{,}5\ k_2).$$

Bevorzugt ist die Ausbildung gemäß den Merkmalen von Anspruch 5 mit zwei in der radial äußeren Oberfläche des Profilblockelements ausgebildeten Zonen, die sich axial längs der Erstreckung des gitterförmigen Feineinschnittsystems über die gesamte axiale Erstreckung des gitterförmigen Feineinschnittsystems im Profilblockelement und in Umfangsrichtung zwischen jeweils einer der beiden das Profilblockelement in Umfangsrichtung zu einer Querrille hin begrenzenden Profilblockelementflanke und dem gitterförmigen Feineinschnittsystem über einen in Umfangsrichtung gemessenen Abstand $w_2$ mit $w_2 > 0$ mm hin erstrecken, der frei von Feineinschnitten ausgebildet ist. Durch die feineinschnittfreien Randzonen sind die Profilblockelemente im für die Trockeneigenschaften wichtigen Randbereich zusätzlich versteift.

Bevorzugt ist die Ausbildung gemäß den Merkmalen von Anspruch 6, wobei für $w_2$ gilt

$$(1{,}15\ k_2) \le w_2 \ \le (1{,}5\ k_2).$$

Bevorzugt ist die Ausbildung gemäß den Merkmalen von Anspruch 7, wobei die zweiten Feineinschnitte in ihrem Erstreckungsbereich zwischen jeweils zwei benachbarten ersten Feineinschnitten geradlinig parallel zueinander verlaufend ausgebildet sind. Hierdurch wird die Beweglichkeit der Profilelemente innerhalb des Feineinschnittgitters verbessert. Selbsthemmung der Profilelemente kann hierdurch vermieden werden.

Bevorzugt ist die Ausbildung gemäß den Merkmalen von Anspruch 8, wobei die zweiten Feineinschnitte zumindest in ihrem Erstreckungsbereich zwischen jeweils benachbarten ersten Feineinschnitten in ihrer Ausrichtung ihre größte Richtungskomponente in axialer Richtung des Fahrzeugluftreifens aufweisen. Dies dient guten Traktions- und Bremseigenschaften. Hierdurch kann die laterale Steifigkeit erhöht werden.

Bevorzugt ist die Ausbildung gemäß den Merkmalen von Anspruch 9, wobei die zweiten Feineinschnitte in ihrer Schnittstelle mit einem ersten Feineinschnitt jeweils mit einem Versatz in Erstreckungsrichtung des ersten Feineinschnitts ausgebildet sind. Hierdurch kann die Steifigkeit des Profilelementes vergleichmäßigt werden.

Die Erfindung wird im Folgenden an Hand der in den Figuren 1 bis 4 dargestellten Ausführungsbeispiele näher erläutert. Darin zeigen

Fig. 1  Fahrzeugluftreifen mit Laufflächenprofil in perspektivischer Darstellung,

Fig. 2  Draufsicht auf einen Umfangsausschnitt des Laufstreifenprofils von Fig. 1,

Fig. 3a  Vergrößertes Profilblockelement zur Erläuterung des erfindungsgemäß ausgebildeten Feineinschnittgitters im unbelasteten Zustand,

Fig. 3b  Profilblockelement von Fig. 3 a in Schnittdarstellung X-X von Fig. 3a,

Fig. 4a  Vergrößertes Profilblockelement von Fig. 3a zur Erläuterung des Gleiteffektes im Feineinschnittgitter im belasteten Zustand beim Durchlaufen des Reifenlatsches

Fig. 4b  Profilblockelement von Fig. 4 a in Schnittdarstellung X-X von Fig. 4a .

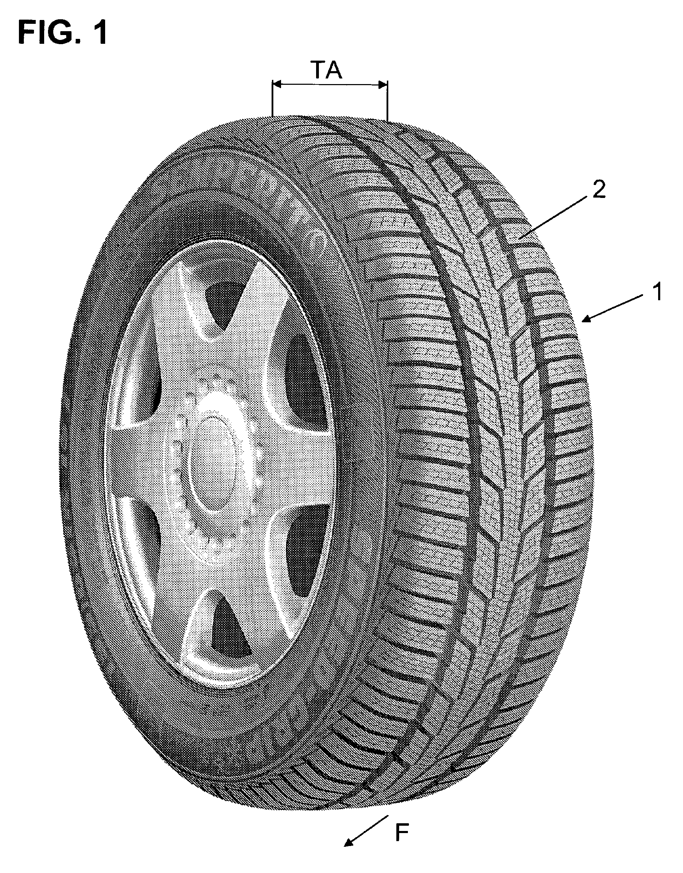

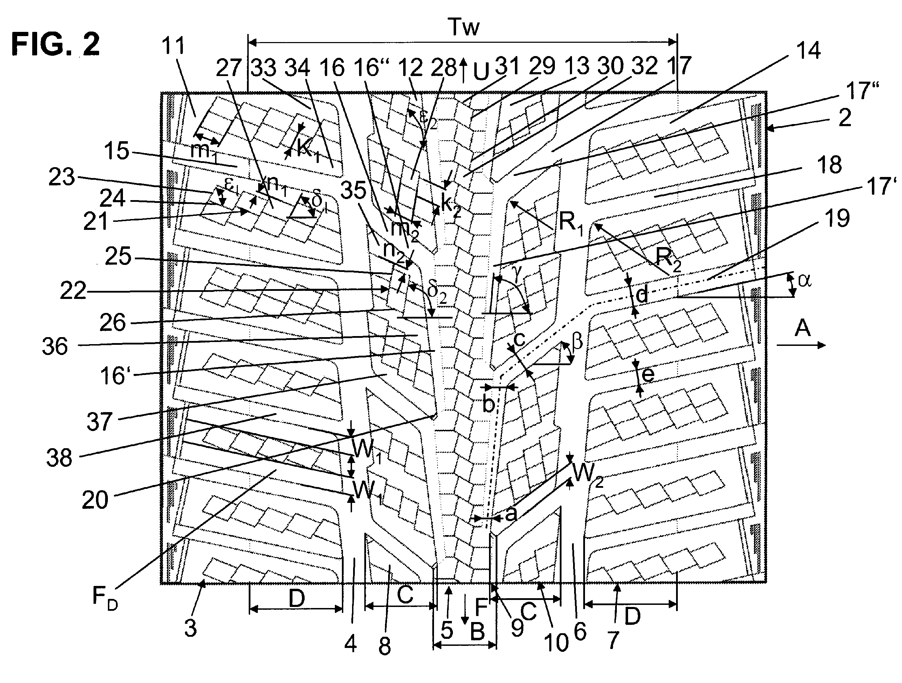

Der in Fig. 1 und 2 dargestellte Fahrzeugluftreifen 1 ist insbesondere als Radialreifen ausgeführt und vorzugsweise ein PKW-Reifen oder ein Reifen für leichte Nutzfahrzeuge. Der Fahrzeugluftreifen ist mit einem Laufstreifenprofil 2 versehen, welches für den Einsatz unter winterlichen Fahrbedingungen besonders geeignet ist. In der folgenden Beschreibung wird das Laufstreifenprofil 2 über seine Breite TA betrachtet, die der Latschbreite und somit der Breite der Bodenaufstandsfläche des Fahrzeugluftreifens im montierten, belasteten Betriebszustand unter Normbedingungen (gemäß E.T.R.T.O. Standards) entspricht.

In Fig.2 ist die axiale Richtung A des Fahrzeugluftreifens mit Pfeildarstellung eingetragen. Ebenso ist die Umfangsrichtung U des Fahrzeugluftreifens mit Pfeildarstellung angegeben.

Bei dem in Fig.2 dargestellten Laufstreifenprofil 2 handelt es sich um ein laufrichtungsgebunden gestaltetes Profil. Das heißt, dass Reifen mit diesem Profil eine bevorzugte Abrollrichtung besitzen, die in Fig. 1 und 2 durch den Pfeil F angedeutet ist, der entgegen der in Fig. 2 mit Pfeil eingetragenen Umfangsrichtung U weist, und dass solche Reifen daher auch entsprechend ihrer Abrollrichtung am Fahrzeug zu montieren sind.

Wie in Fig. 2 zu erkennen ist, ist das Laufstreifenprofil 2 in axialer Richtung ausgehend von der linken Reifenschulter zur rechten Reifenschulter hin aus einer linken Schulterprofilblockreihe 3, einer Umfangsrille 4, einem Mittenprofilband 5, einer Umfangsrille 6 und einer rechten Schulterprofilblockreihe 7 ausgebildet, die sich jeweils in Umfangsrichtung U über den gesamten Umfang des Fahrzeugluftreifens hin erstrecken. Die linke Schulterprofilblockreihe 3 ist in axialer Richtung vom Mittenprofilband 5 axial durch die Umfangsrille 4 und das Mittenprofilband 5 von der rechten Schulterprofilblockreihe 7 durch die Umfangsrille 6 axial getrennt.

Die linke Schulterprofilblockreihe 3 erstreckt sich ebenso wie die rechte Schulterprofilblockreihe 7 über den gesamten Umfang des Fahrzeugluftreifens in Umfangsrichtung U und ist in jeweils aus einer Vielzahl von in Umfangsrichtung U hintereinander angeordneten Profilblockelementen 11 bzw. 14 ausgebildet. Dabei sind die in Umfangsrichtung U hintereinander angeordneten Profilblockelemente 11 der Schulterprofilblockreihe 3 in Umfangsrichtung U in alternierender Reihenfolge durch Querrillen 15 bzw. durch Querrillen 38 voneinander getrennt. Die in Umfangsrichtung U hintereinander angeordneten Profilblockelemente 14 der Schulterprofilblockreihe 7 in Umfangsrichtung U in alternierender Reihenfolge durch Querrillen 19 bzw. durch Querrillen 18 voneinander getrennt.

Das Mittenprofilband 5 ist aus einer zentralen über den Umfang des Fahrzeugluftreifens in Umfangsrichtung U ausgerichtet erstreckten Profilrippe 9 ausgebildet, deren axiale Flanken im wesentlichen aus über den Umfang des Fahrzeugluftreifens verteilten ersten Umfangsabschnitten ausgebildet sind, die in der entgegen der Abrollrichtung F eingetragenen Umfangsrichtung U gesehen unter Einschluss eines Neigungswinkels zur Axialen A von der Profilrippe 9 axial wegweisend nach außen zu der jeweiligen Reifenschulter hin geneigt verlaufen und zwischen denen jeweils in Umfangsrichtung gegenüber den ersten Umfangsabschnitten deutlich kürzere zweite Umfangsabschnitte ausgebildet sind, in denen die jeweilige Flanke einen axial gegenläufig steigend verlaufenden Versatzabschnitt in axialer Richtung zur Rippenmitte der Profilrippe 9 hin mit einem deutlich kleineren Neigungswinkel zur Axialen A aufweisen. Die Umfangspositionen des axialen Versatzes auf der rechts dargestellten Rippenflanke der Profilrippe 9 sind gegenüber den Umfangspositionen des axialen Versatzes auf der linken Rippenflanke der Profilrippe 9 in Umfangsrichtung des Fahrzeugluftreifens versetzt zu einander ausgebildet. Ausgehend von den den axialen Versatz darstellenden kurzen Umfangsabschnitten mit axial nach innen zur Profilrippenmitte hin steigend verlaufenden Abschnitts der jeweiligen Rippenflanke der Profilrippe 9 sind jeweils Profilblockelemente 12 bzw. Profilblockelemente 13 ausgebildet, die sich von der Position des kurzen Versatzes in die entgegen der Abrollrichtung F eingetragene Umfangsrichtung U gesehen und von der Profilrippe 9 weg weisend nach axial außen erstrecken, wobei sich die Profilblockelemente 12 von der Profilrippe 9 ausgehend in Richtung der Schulterprofilblockreihe 3 und die Profilblockelemente 13 in Richtung der Schulterprofilblockreihe 14 erstrecken. Die in Umfangsrichtung U des Fahrzeugluftreifens hintereinander angeordneten Profilblockelemente 12 bilden in Umfangsrichtung U des Fahrzeugluftreifens gesehen eine über den Versatz an die Profilrippe 9 angelehnte Profilblockreihe 8. Die Profilblockelemente 13 bilden in Umfangsrichtung U des Fahrzeugluftreifens gesehen eine über den Versatz an die Profilrippe 9 angelehnte Profilblockreihe 10.

Jedes Profilblockelement 12 ist längs seiner Erstreckung in Umfangsrichtung U ausgehend von der Position des jeweiligen kurzen Versatzes von der Profilrippe 9 längs eines ersten Umfangsabschnitts der Profilrippe 9 durch einen ersten Erstreckungsbereich 16' einer Rille 16 axial getrennt., der an dem vom kurzen Versatz gegenüberliegenden Ende des Erstreckungsbereichs des ersten Umfangsabschnitts der Profilrippe 9 unter Ausbildung eines axial nach außen zur Schulterprofilblockreihe 3 hin gerichteten Knicks in einen zweiten Abschnitt 16" der Rille 16 übergeht, welcher das Profilblockelement 12 von dem in Umfangsrichtung U nächstliegenden nachfolgenden Profilblockelement 12 trennt. Ebenso ist jedes Profilblockelement 13 längs seiner Erstreckung in Umfangsrichtung U ausgehend von der Position des jeweiligen kurzen Versatzes von der Profilrippe 9 längs eines ersten Umfangsabschnitts der Profilrippe 9 durch einen ersten Erstreckungsbereich 17' einer Rille 17 axial getrennt., der an dem vom kurzen Versatz gegenüberliegenden Ende des Erstreckungsbereichs des ersten Umfangsabschnitts der Profilrippe 9 unter Ausbildung eines axial nach außen zur Schulterprofilblockreihe 7 hin gerichteten Knicks in einen zweiten Abschnitt 17" der Rille 17 übergeht, welcher das Profilblockelement 13 von dem in Umfangsrichtung U nächstliegenden nachfolgenden Profilblockelement 13 trennt.

In Umfangsrichtung U beginnt im Anschluss an die jeweilige Knickstelle zwischen Abschnitt 16' und Abschnitt 16" der Rille 16 bzw. des Abschnitts 17' und 17" der Rille 17 ein zweiter Umfangsabschnitt der Profilrippe 9, in dem diese mit ihrer jeweils zur Rille 16 bzw. zur Rille 17 ausgebildeten Rillenflanke mit dem nach axial innen gerichteten Versatz ausgebildet ist. Der Versatz bildet wiederum ein stumpfes Ende eines neuen Abschnitts 16' der Rille 16 bzw. des Abschnitts 17' der Rille 17, der vom Versatz in Umfangsrichtung U ausgehend das nächste Profilblockelement 12 bzw. 13 von der Profilrippe 9 trennt. Im Bereich des Versatzes ist dabei jeweils zwischen der Knickstelle im Übergang von Abschnitt 16' und Abschnitt 16" der einen Rille 16 bzw. von Abschnitt 17' und 17" der einen Rille 17 zum Abschnitts 16' der Versatz in Umfangsrichtung U nachfolgenden Rille 16 bzw. zum Abschnitts 17' der Versatz in Umfangsrichtung U nachfolgenden Rille 17 zwischen Flanke der Profilrippe im zweiten mit Versatz ausgebildeten Umfangserstreckungsabschnitt der Profilrippe 9 und dem in Umfangsrichtung U angrenzenden Profilblockelement 12 bzw. Profilblockelement 13 jeweils lediglich ein kleiner Entkopplungsspalt 20 ausgebildet. Die Spaltbreite ist einem Ausführungsbeispiel 1mm bis 2mm breit, beispielsweise 1 mm breit, gewählt. Der Spalt ist dabei höchstens dreimal so tief (in radialer Richtung) wie breit gewählt.

Die Rillen 16 und die Rillen 17 sind in ihrem gesamten Erstreckungsbereich 16' bzw. 17' jeweils geradlinig verlaufend, jedoch in der dargestellten Umfangsrichtung U mit kontinuierlich zunehmender Breite der Rille ausgehend von einer Breite a bis zu einer Breite b ausgebildet, wobei die Breite der Rillen jeweils senkrecht zu ihrer Erstreckungsrichtung und in der radial äußeren Kontaktfläche des Reifens zur Straßenoberfläche gemessen wird. In Fig. 2 ist am Beispiel des Abschnitts 17' einer Rille 17" die Breite a am Beginn des Abschnitts 17' und die Breite b am Ende des Abschnitts 17' eingetragen.

Die Rillen 16 bzw. die Rillen 17 erstreckt sich in ihrem Erstreckungsbereich 16" bzw. 17" ebenfalls mit einem geradlinigen Verlauf, sind in diesem Erstreckungsbereich jedoch mit einer konstanten Rillenbreite c ausgebildet, wobei $c \geq b > a$.

Die Breiten a und b sind derart gewählt, dass für a und b gilt: $(1,2\,a) < b < (2,3\,a)$

In ihrer axialen Verlängerung über die Umfangsrille 4 hinweg geht jede Rille 16 jeweils in eine Querrille 15 der Profilblockreihe 3 über. Ebenso geht in ihrer axialen Verlängerung über die Umfangsrille 6 hinweg jede Rille 17 jeweils in eine Querrille 19 der Profilblockreihe 7 über.

In axialer Richtung von der Profilrippe 9 ausgehend jeweils nach außen zu den Reifenschultern gesehen, schließen die Abschnitte 16' bzw. 17' der Rillen 16 und 17 mit ihrem Erstreckungsverlauf jeweils einen Steigungswinkel γ zur Axialen A des Fahrzeugluftreifens, die Abschnitte 16" bzw. 17" der Rillen 16 und 17 schließen mit ihrem Erstreckungsverlauf jeweils einen Steigungswinkel β zur Axialen A des Fahrzeugluftreifens ein und die Querrillen 15 und 19 der Schulterprofilblockreihe 3 bzw. 7 mit ihrem Erstreckungsverlauf jeweils einen Steigungswinkel α zur Axialen A des Fahrzeugluftreifens ein. Für die Steigungswinkel α, β und γ gilt: $γ > β > α$., wobei $90° \geq γ \geq 70°$, $70° \geq β \geq 25°$ und $25° \geq α \geq 5°$. In einer beispielhaften Ausführung sind die Steigungswinkel α, β und γ wie folgt gewählt:

$$90° \geq γ \geq 80°, \ 50° \geq ß \geq 30° \ \text{und} \ 20° \geq α \geq 10°.$$

In einer beispielhaften Ausführung sind die Steigungswinkel α, β und γ wie folgt gewählt: $γ = 85°$, $β = 45°$ und $α = 15°$.

Auf diese Weise bilden die Rillen 16 mit den Querrillen 15 und die Rillen 17 mit den Querrillen 19 einen V-förmigen Profilverlauf des Laufstreifenprofils 2 des Fahrzeugluftreifens aus.

Die Profilblockelemente 12 bzw. 13 sind an ihren die Profilrillen 16 bzw. 17 begrenzenden Profilblockelementflanken jeweils im abgeknickten Übergangsbereich zwischen den Rillenabschnitten 16' und 16" bzw. zwischen den Rillenabschnitten 17' zu 17" einen unter einem Krümmungsradius $R_1$ gekrümmten Flankenverlauf ausgebildet.

Die Profilblockelemente 11 der Profilblockreihe 3 sind an ihrer axial zur Umfangsrille 4 die Profilblockelemente 11 begrenzenden Flanke mit gleicher Neigungsrichtung zur axialen A wie der Flankenverlauf der Profilblockelemente 12 an ihrer den Rillenabschnitt 16' der Rillen 16 begrenzenden Flanke ausgebildet. In einer besonderen in Fig. 1 dargestellten Ausführung sind die Profilblockelemente 11 der Profilblockreihe 3 an ihrer axial zur Umfangsrille 4 die Profilblockelemente 11 begrenzenden Flanke mit einem parallel zum Flankenverlauf der Profilblockelemente 12 an ihrer den Rillenabschnitt 16' der Rillen 16 begrenzenden Flanke ausgebildet. Die Profilblockelemente 14 der Profilblockreihe 7 sind an ihrer axial zur Umfangsrille 6 die Profilblockelemente 14 begrenzenden Flanken mit gleicher Neigungsrichtung zur axialen A wie der Flankenverlauf der Profilblockelemente 13 an ihrer den Rillenabschnitt 17' der Rillen 17 begrenzenden Flanke ausgebildet. In einer besonderen in Fig. 1 dargestellten Ausführung sind die Profilblockelemente 14 der Profilblockreihe 7 an ihrer axial zur Umfangsrille 6 die Profilblockelemente 14 begrenzenden Flanken mit einem parallel zu dem Flankenverlauf der Profilblockelemente 13 an ihrer den Rillenabschnitt 17' der Rillen 17 begrenzenden Flanke ausgebildet.

Die ein Profilblockelement 11 zur Umfangsrille 4 hin jeweils begrenzende Flanke erstreckt sich in Umfangsrichtung U (entgegen der Abrollrichtung F) jeweils bis zur nächsten in Umfangsrichtung U das jeweilige Profilblockelement 11 begrenzenden Querrille 15 bzw. 38. Die ein Profilblockelement 14 zur Umfangsrille 6 hin jeweils begrenzende Flanke erstreckt sich in Umfangsrichtung U (entgegen der Abrollrichtung F) jeweils bis zur nächsten in Umfangsrichtung U das jeweilige Profilblockelement 14 begrenzenden Querrille 18 bzw. 19. In diesen Übergangsbereichen zwischen Umfangsrille 4 und Querrille 38 bzw. 15 sowie zwischen Umfangsrille 6 und Querrille 18 bzw. 19 ist das jeweilige Profilblockelement 11 bzw. 14 mit seinem Flankenverlauf mit einem Krümmungsradius $R_2$ gekrümmt ausgebildet.

Die Krümmungsradien $R_2$ und $R_1$ sind derart gewählt, dass für sie gilt: $R_2 \geq R_1$

Die Querrillen 38 enden in ihrer axialen Verlängerung zum Mittenprofilband 5 hin stumpf in der Umfangsrille 4. Ebenso enden die Querrillen 18 der Profilblockreihe 7 in ihrer axialen Verlängerung zum Mittenprofilband 5 hin stumpf in der Umfangsrille 6. Die Querrillen 38 sind in ihrer Erstreckungsrichtung geradlinig verlaufend und parallel zu den Querrillen 15 ausgebildet. Die Querrillen 18 sind ebenfalls in ihrer Erstreckungsrichtung geradlinig und parallel zu den Querrillen 19 verlaufend ausgebildet. Die Querrillen 38 bzw. 18 sind mit einer Breite e, die Querrillen 18 bzw. 15 sind mit einer Breite d ausgebildet, wobei die Breite der Rillen jeweils senkrecht zu ihrer Erstreckungsrichtung und in der radial äußeren Kontaktfläche des Reifens zur Straßenoberfläche gemessen wird Dabei gilt: c < d.

In einer besonderen Ausführung gilt darüber hinaus e < d, wobei (0,3 d) < e < (0,95 d).

Wie in Fig. 2 dargestellt, erstrecken sich die Profilblockelemente 33 der Schulterprofilblockreihe 3 in axialer Richtung innerhalb der Aufstandsbreite TA ausgehend vom in Fig. 2 links eingezeichneten Erstreckungsrand der Aufstandsbreite TA in axialer Richtung bis zur Umfangsrille 4 über eine maximale axiale Erstreckung der Breite D. Ebenso erstrecken sich die in Profilblockelemente 33 der Schulterprofilblockreihe 7 innerhalb der Aufstandsbreite TA ausgehend vom rechts eingetragenen Rand der Aufstandsbreite TA in axialer Richtung bis zur Umfangsrille 6 über eine maximale axiale Erstreckung der Breite D.

Die Profilblockelemente 12 sowie die Profilblockelemente 13 erstrecken sich in axialer Richtung jeweils über eine maximale axiale Erstreckung der Breite C. Die Profilrippe 5 erstreckt sich in axialer Richtung über eine maximale axiale Erstreckung der Breite B. Die axialen Breiten B, C und D sind die Breiten in der radial äußeren Mantelfläche des Fahrzeugluftreifens, die die Kontaktfläche zur Straßenoberfläche darstellt. Die axialen Breiten B, C und D entsprechen dabei jeweils den axialen Erstreckungsbreiten, die sich bei Projektion des jeweiligen Profilblockelements 11, 14, 12, 13 bzw. der Profilrippe 9 in Umfangsrichtung des Fahrzeugluftreifens ergibt.

Die Profilblockelemente 11 und 14 der Schulterprofilblockreihen 3 und 7, die Profilblockelemente 12 und 13 und die Profilrippe 9 sind dabei so ausgelegt, dass für die Breiten ihrer maximalen axialen Erstreckung gilt: D > C > B mit B ≤ (0,18 TA).

Die Profilblockelemente 11 der Schulterprofilblockreihe 3 sind ebenso wie die Profilblockelemente 14 der Schulterprofilblockreihe 7 jeweils mit einem Feineinschnittgitter 21 bestehend aus in dem jeweiligen Profilblockelement 11 bzw. 14 parallel zueinander ausgerichteten in axialer Richtung A des Fahrzeugluftreifens äquidistant beabstandeten Feineinschnitten 23 und aus ebenfalls innerhalb des Profilblockelementes 11 bzw. 14 jeweils parallel zueinander ausgerichteten Feineinschnitten 24 ausgebildet. Die Feineinschnitte 23 sind längs ihrer Erstreckung in Richtung der eingetragenen Umfangsrichtung U (d.h. entgegen der Abrollrichtung F) gesehen zusätzlich mit einer axialen Richtungskomponente in Richtung des Kronenbereichs des Fahrzeugluftreifens und somit zur Umfangsrippe 9 hin unter Einschluss eines Steigungswinkels $\delta_1$ zur Axialen A ausgebildet, wobei für $\delta_1$ gilt:

$$50° \leq \delta_1 \leq 85°.$$

In besonderer Ausbildung gilt für $\delta_1$: $55° \leq \delta_1 \leq 80°$. Beispielsweise ist $\delta_1$ derart gewählt, dass $\delta_1 = 60°$. Die Feineinschnitte 24 schließen einen Steigungswinkel $\varepsilon_1$ zum Erstreckungsrichtung der Feineinschnitte 23 innerhalb eines Profilblockelementes 11 bzw. 14 ein, für den gilt: $30° \leq \varepsilon_1 \leq 150°$. In einer besonderen Ausführung gilt: $80° \leq \varepsilon_1 \leq 100°$. Der Winkel $\varepsilon_1$ ist dabei ausgehend vom Schnittpunkt des jeweiligen Feineinschnitts 24 mit dem Feineinschnitt 23 von der vom Schnittpunkt in Umfangsrichtung U weisenden Erstreckungsstrahl des Feineinschnittes 23 in Richtung der Umfangsprofilrippe 9 gedreht.

Wie in Fig. 2 dargestellt ist, ist in einer besonderen Ausführung $\varepsilon_1$ ein spitzer Winkel mit $75° \leq \varepsilon_1 \leq 85°$. Beispielsweise ist $\varepsilon_1$ derart ausgewählt, dass $\varepsilon_1 = 80°$.

Dabei sind die Feineinschnitte 24 derart im jeweiligen Profilblockelement 11 bzw. 14 angeordnet, dass jeder Feineinschnitt 23 mit seinem axial benachbarten Feineinschnitt 23 jeweils durch N Feineinschnitte 24 miteinander verbunden sind. Der in den Profilblockelementen 11 der Profilblockreihe 3 zur Umfangsrille 4 sowie der in den Profilblockelementen 14 der Profilblockreihe 7 zur Umfangsrille 6 hin jeweils nächstliegende Feineinschnitt 23 ist jeweils mit der entsprechend axial benachbarten Umfangsrille 4 bzw. 6 ebenfalls durch N Feineinschnitte 24 verbunden. Innerhalb eines Profilblockelementes 11 bzw. 14 sind die zwischen zwei benachbarten Feineinschnitten 23 bzw. zwischen dem der axial benachbarten Umfangsrille 4 bzw. 6 nächstliegenden Feineinschnitt 23 und der Umfangsrille 4 bzw. 6 jeweils ausgebildeten N Feineinschnitte 24 jeweils mit gleichem Abstand $k_1$ zu dem in Erstreckungsrichtung der Feineinschnitte 23 nächstliegenden Feineinschnitt 24 ausgebildet, wobei der Abstand $k_1$ in Erstreckungsrichtung der Feineinschnitte 23 des jeweiligen Profilblockelementes 11 bzw. 14 gemessen wird. Die benachbarten Feineinschnitte 23 eines Profilblockelementes 11 bzw. eines Profilblockelementes 14 sind innerhalb eines Profilblockelementes 11 bzw. 14 jeweils mit gleichem Abstand $m_1$ zueinander ausgebildet, wobei der Abstand $m_1$ in Erstreckungsrichtung der Feineinschnitte 24 des Profilblockelementes 11 bzw. 14 gemessen wird.

Für die Abstände $k_1$ und $m_1$ gilt: $k_1 < m_1$. In einer besonderen Ausführung gilt:

$(1,2m_1) \leq k_1 \leq (1,8m_1)$. In einem Ausführungsbeispiel ist gewählt: $k_1 = (1,5m_1)$.

Innerhalb eines Profilblockelements 11 bzw. 14 sind dabei die jeweils die von der axialen Innenseite des Fahrzeugluftreifens in einen Feineinschnitt 23 mündenden Feineinschnitte 21 gegenüber den von der axialen Außenseite des Fahrzeugluftreifens in den Feineinschnitt 23 mündenden Feineinschnitten 24 in Umfangsrichtung U, d.h. entgegen der Abrollrichtung F, gerichteter Sicht, um einen Abstand n versetzt, wobei das Maß $n_1$ in Richtung der Erstreckungs-richtung des jeweiligen Feineinschnitts 23 gemessen wird.

Dabei gilt: $0 < n_1 < k_1$. In einer besonderen Ausführung gilt:
$0 < n_1 \leq (0,4 k_1)$. In einem Ausführungsbeispiel ist gewählt: $n_1 = (0,25 k_1)$.

Jeder Feineinschnitt 23 des Feineinschnittgitters 21 ist dabei jeweils so ausgebildet, dass an dem in Umfangsrichtung U gesehenen Anfang als auch an dem in Umfangsrichtung U gesehenen Ende eines Feineinschnitts 23 jeweils ein Feineinschnitt 24 in den Feineinschnitt 23 mündet.

Die Feineinschnittgitter 21 bilden auf diese Weise ein Gitter aus von durch die Feineinschnitte 23 und 24 gebildeten Gitterlinien mit von den Gitterlinien jeweils umschlossenen Profilblockausschnittselementen 27.

Die Feineinschnittsgitter 21 sind dabei derart in den Profilblockelementen 11 bzw. 14 der Profilblockreihen 3 bzw. 7 angeordnet, dass in Umfangsrichtung U gesehen jeweils vor- und hinter dem Feineinschnittsgitter ein feineinschnittsfreier über die gesamte axiale Erstreckung des Profilblockelements 11 bzw. 14 erstreckter Umfangsabschnitt 33 bzw. 34 des Profilblockelements 11 bzw. 14 der Umfangslänge $w_1$ mit $w_1 > 0$mm mit einer lamellenfreier Fläche $F_D$ verbleibt, der das Feineinschnittgitter 21 in Umfangsrichtung von den das jeweilige Profilblockelement 11 bzw. 14 begrenzenden Querrillen 15 und 38 bzw. 18 und 19 trennt. In einer besonderen Ausführung gilt: $(1,15 k_1) \leq w_1 \leq (1,5 k_1)$.

Die Profilblockelemente 12 der Profilblockreihe 8 sind ebenso wie die Profilblockelemente 13 der Profilblockreihe 10 jeweils mit einem Feineinschnittgitter 22 bestehend aus in dem jeweiligen Profilblockelement 12 bzw. 13 parallel zueinander ausgerichteten in axialer Richtung A des Fahrzeugluftreifens äquidistant beabstandeten Feineinschnitten 25 und aus ebenfalls innerhalb des Profilblockelementes 12 bzw. 13 jeweils parallel zueinander ausgerichteten Feineinschnitten 26 ausgebildet. Die Feineinschnitte 25 sind längs ihrer Erstreckung in Richtung der eingetragenen Umfangsrichtung U (d.h. entgegen der Abrollrichtung F) gesehen zusätzlich mit einer axialen Richtungskomponente in Richtung des Kronenbereichs des Fahrzeugluftreifens und somit zur Umfangsrippe 9 hin unter Einschluss eines Stei-gungswinkels $\delta_2$ zur Axialen A ausgebildet, wobei für $\delta_2$ gilt:

$$50° \leq \delta_2 \leq 90°.$$

In besonderer Ausbildung gilt für $\delta_2$: $55° \leq \delta_2 \leq 85°$. Beispielsweise ist $\delta_2$ derart gewählt, dass $\delta_2 = 80°$. Die Feineinschnitte 26 schließen einen Steigungswinkel $\varepsilon_2$ zum Erstreckungsrichtung der Feineinschnitte 25 innerhalb eines Profilblockelementes 12 bzw. 13 ein, für den gilt: $30° \leq \varepsilon_2 \leq 150°$. In einer besonderen Ausführung gilt: $80° \leq \varepsilon_2 \leq 120°$. In einer Ausführung ist $\varepsilon_2$ beispielsweise mit $\varepsilon_2 = 115°$ gewählt. Der Winkel $\varepsilon_2$ ist dabei ausgehend vom Schnittpunkt des jeweiligen Feineinschnitts 26 mit dem Feineinschnitt 25 von der vom Schnittpunkt in Umfangsrichtung U weisenden Erstreckungsstrahl des Feineinschnittes 25 in Richtung der Umfangsprofilrippe 9 gedreht.

Dabei sind die Feineinschnitte 26 derart im jeweiligen Profilblockelement 12 bzw. 13 angeordnet, dass jeder Feineinschnitt 25 mit seinem axial benachbarten Feineinschnitt 25 jeweils durch N Feineinschnitte 26 miteinander verbunden sind. Der in den Profilblockelementen 12 der Profilblockreihe 8 jeweils zur Umfangsrille 4 und zum Rillenabschnitt 16' sowie der in den Profilblockelementen 13 der Profilblockreihe 10 jeweils zur Umfangsrille 6 und zum Rillenabschnitt 17' hin jeweils nächstliegende Feineinschnitt 25 ist jeweils mit der entsprechend axial benachbarten Umfangsrille 4, dem Rillenabschnitt 16', der Umfangsrille 6 bzw. dem Rillenabschnitt 17' ebenfalls durch N Feineinschnitte 26 verbunden. Innerhalb eines Profilblockelementes 12 bzw. 13 sind die zwischen zwei benachbarten Feineinschnitten 25 bzw. zwischen dem der axial benachbarten Umfangsrille 4, dem Rillenabschnitt 16', der Umfangsrille 6 bzw. dem Rillenabschnitt 17' nächstliegenden Feineinschnitt 25 und der Umfangsrille 4, dem Rillenabschnitt 16', der Umfangsrille 6 bzw. dem Rillenabschnitt 17' jeweils ausgebildeten N Feineinschnitte 26 jeweils mit gleichem Abstand $k_2$ zu dem in Erstreckungsrichtung der Feineinschnitte 25 nächstliegenden Feineinschnitt 26 ausgebildet, wobei der Abstand $k_2$ in Erstreckungsrichtung der Feineinschnitte 25 des jeweiligen Profilblockelementes 12 bzw. 13 gemessen wird. Die benachbarten Feineinschnitte 25 eines Profilblockelementes 12 bzw. eines Profilblockelementes 13 sind innerhalb eines Profilblockelementes 12 bzw. 13 jeweils mit gleichem Abstand $m_1$ zueinander ausgebildet, wobei der Abstand $m_2$ in Erstreckungsrichtung der Fein-einschnitte 26 des Profilblockelementes 12 bzw. 13 gemessen wird.

Für die Abstände $k_2$ und $m_2$ gilt: $k_2 \leq m_2$. In einer besonderen Ausführung gilt: $k_2 = m_2$.

Für die Abstände $k_2$ und $k_1$ gilt: $k_1 \leq k_2$. In einer besonderen Ausführung gilt:

$$k_1 \leq k_2 \leq (1{,}15\,k_1).$$

Innerhalb eines Profilblockelements 12 bzw. 13 sind dabei die jeweils die von der axialen Innenseite des Fahrzeugluftreifens in einen Feineinschnitt 25 mündenden Feineinschnitte 22 gegenüber den von der axialen Außenseite des Fahrzeugluftreifens in den Feineinschnitt 25 mündenden Feineinschnitten 26 in Umfangsrichtung U, d.h. entgegen der Abrollrichtung F, gerichteter Sicht, um einen Abstand $n_2$ versetzt, wobei das Maß $n_2$ in Richtung der Erstreckungsrichtung des jeweiligen Feineinschnitts 25 gemessen wird.

Dabei gilt: $0 < n_2 < k_2$. In einer besonderen Ausführung gilt: $0 < n_2 \leq (0{,}4\,k_2)$. In einem Ausführungsbeispiel ist gewählt :

$$n_2 = (0{,}25\,k_2).$$

Für die Absätze $n_2$ und $n_1$ gilt: $n_1 \leq n_2$. In einer besonderen Ausführung gilt: $n_2 = n_1$.

Jeder Feineinschnitt 25 des Feineinschnittgitters 22 ist dabei jeweils so ausgebildet, dass an dem in Umfangsrichtung U gesehenen Anfang als auch an dem in Umfangsrichtung U gesehenen Ende eines Feineinschnitts 25 jeweils ein Feineinschnitt 26 in den Feineinschnitt 25 mündet.

Die Feineinschnittgitter 22 bilden auf diese Weise ein Gitter aus von durch die Feineinschnitte 25 und 26 gebildeten Gitterlinien mit von den Gitterlinien jeweils umschlossenen Profilblockausschnittselementen 27.

Die Feineinschnittsgitter 22 sind dabei derart in den Profilblockelementen 12 bzw. 13 der Profilblockreihen 8 bzw. 10 angeordnet, dass in Umfangsrichtung U gesehen jeweils vor- und hinter dem Feineinschnittsgitter ein feineinschnittsfreier über die gesamte axiale Erstreckung des Profilblockelements 12 bzw. 13 erstreckter Umfangsabschnitt 35 bzw. 37 des Profilblockelements 12 bzw. 13 der Umfangslänge $w_2$ mit $w_2 > 0$mm mit einer lamellenfreier Fläche $F_c$ verbleibt, der das Feineinschnittgitter 22 in Umfangsrichtung jeweils von den das jeweilige Profilblockelement 12 bzw. 13 begrenzenden Rillenbereiche 16'' bzw. 17'' trennt. In einer besonderen Ausführung gilt: $(1{,}15\,k_2) \leq w_2 \leq (1{,}5\,k_2)$.

Dabei sind in den Profilblockelementen 12 bzw. 13 jeweils 2 derartige in Umfangsrichtung hintereinander angeordnete Feineinschnittgitter 22 ausgebildet, wobei zwischen diesen beiden Feineinschnittgittern 22 eines Profilblockelementes 12 bzw. 13 jeweils ein sich über die gesamte axiale Erstreckung des Profilblockelements erstreckter feineinschnittsfreier Bereich 36 der Umfangslänge $w_3$ mit $w_3 > 0$mm der Fläche $F_c$ ausgebildet ist. In einer besonderen Ausführung gilt: $(1{,}15\,k_2) \leq w_3 \leq (1{,}5\,k_2)$.

Für die feineinschnittsfreien Bereiche 33 und 34 der Profilblockelemente 11 bzw. 14 mit ihren innerhalb der axialen Erstreckung der Bodenaufstandsfläche TW ausgebildeten feineinschnittsfreien Flächen $F_D$ und für die feineinschnittsfreie Bereiche 35, 36, 37 mit ihren feineinschnittsfreien Flächen $F_C$ der Profilblockelemente 12 und 13 gilt:

$$(0{,}9\,F_C) < F_D < (1{,}7\,F_C.)$$

Im Umfangserstreckungsbereich, der die beiden Feineinschnittsgitter 22 eines Profilblockelementes 12 bzw. 13 jeweils trennenden feineinschnittsfreien Fläche 36 weist die das jeweilige Profilblockelement 35 bzw. 36 zu der jeweils nach axial außen hin angrenzenden Umfangsrille 4 bzw. 6 begrenzenden Profilblockelementflanke einen in Umfangsrichtung U (d.h. entgegen der Abrollrichtung F) gesehenen axialen Versatz in Richtung der Profilrippe 9 hin auf In Umfangsrichtung U vor und hinter dem kurzen Abschnitt des axialen Versatzes ist diese Profilblockelementflanke in Umfangrichtung U gesehen jeweils mit einer von der Profilrippe 9 wegweisenden axialen Richtungskomponente ausgebildet. Auf diese Weise ist die jeweilige Umfangsrille 4 und 6 an ihrer nach axial innen zur Profilrippe 9 gerichteten Rillenwand über den Umfang des Fahrzeugluftreifens gesehen zickzackförmig ausgebildet.

Die Profilrippe 9 ist mit einem Feineinschnittsgitter 29 aus in Umfangsrichtung hintereinander angeordneten parallelen äquidistant zueinander ausgebildeten ersten Feineinschnitten 31, die sich über die gesamte axiale Erstreckung der Profilrippe 9 hin erstrecken und die im axial äußeren Erstreckungsbereich jeweils nahezu achsparallel und in einem zwischen diesen beiden axialen Erstreckungsbereichen axialen Erstreckungsbereich mit größerer Umfangskomponente in ihrem Richtungsverlauf ausgebildet sind, und mit jeweils zwei zueinander parallelen Feineinschnitten 30, die jeweils zwei der in Umfangsrichtung hintereinander angeordnete Feineinschnitte 31 verbinden, ausgebildet. Jeder Feineinschnitt 30 mündet dabei in einen Feineinschnitt 31 im Bereich dessen geradlinig ansteigenden axialen Zwischenerstreckungsbereichs mit größerer Umfangsrichtungskomponente und mit seinem anderen Ende in einen anderen Feineinschnitt 31 an dessen Knickstelle beim Übergang zwischen nahezu achsparallelen Randbereich in den axialen Zwischenerstreckungsbereich mit größerer Umfangskomponente.

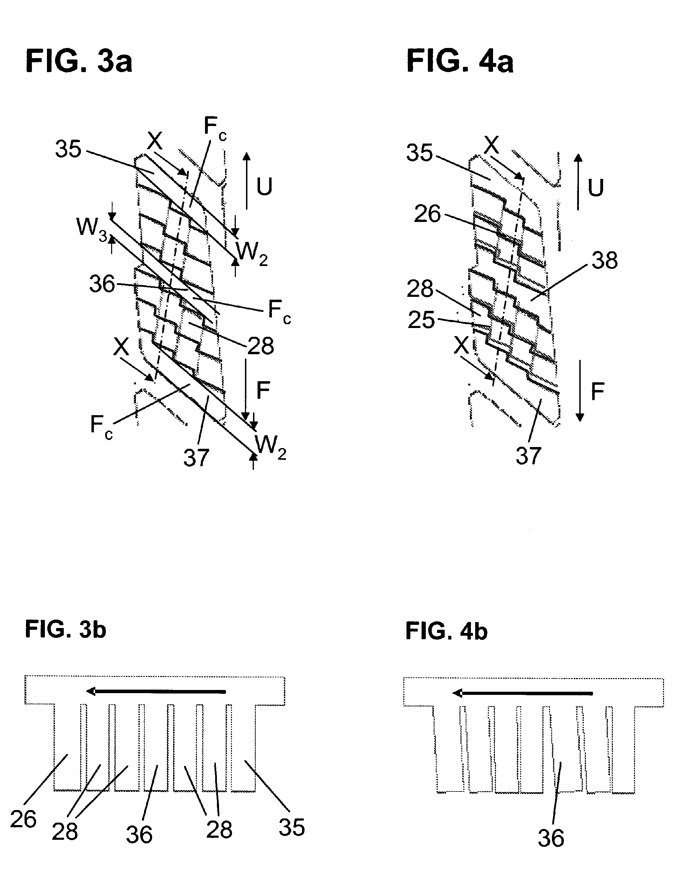

Die Figuren 3a und 3b zeigen am Beispiel eines Profilblockelementes 12 den Zustand des Profilblockelementes im Normzustand des Fahrzeugluftreifens außerhalb des Reifenlatsches. Die Figuren 4a und 4b zeigen das gleiche Profilblockelement 12 beim Durchlaufen des Reifenlatsches.

Dabei zeigen die Figuren 3b bzw. 4b einen Schnitt längs der Darstellung X-X der jeweiligen Figur 3a bzw. 4a. Dabei ist deutlich erkennbar, dass beim Abrollen des Profilblockelements 12 die vom Feineinschnittsgitter 22 umrahmten beiderseits eines Feineinschnitts 25 angeordneten Profilblockausschnittselemente 28 längs des Feineinschnitts 25 aneinander vorbeigleitend den Belastungen ausweichen, wodurch sich die Feineinschnitte 26 unter Bildung von Öffnungsspalten öffnen. Aufgrund Ihrer erhöhten Steifigkeit bleiben die feineinschnittsfreien Bereiche 35, 38 und 37 demgegenüber in ihrer Position weitgehend unverändert. Wie in Fig. 4b deutlich zu erkennen ist, bilden sich dabei insbesondere je nach Abrollrichtung zwischen den feineinschnittfreien Bereichen 35, 38 und 37 und den unmittelbar in Umfangsrichtung benachbarten Profilblockausschnittselementen 28 besonders große Öffnungsspalten zur Aufnahme von Schnee.

Wie Fig. 2 zu entnehmen ist, sind dabei sowohl in den Profilblockreihen 3 und 7 mit den Profilblockelementen 11 und 14 als auch bei den Profilblockelementen 12 und 13 Profilblockelemente ausgebildet, bei denen die Feineinschnittsgitter 21 bzw. 22 jeweils Gitterstrukturen mit in Umfangsrichtung jeweils hintereinander ausgebildeten Profilblockausschnittselementen 27 bzw. 28 aufweisen (N > 2, z.B. N=3 ), als auch Profilblockelemente mit Feineinschnittsgittern 21 bzw. 22, bei denen lediglich ein Profilblockausschnittselement in Umfangsrichtung ausgebildet ist (N=2).

**Bezugszeichenliste**

(Teil der Beschreibung)

| | |
|---|---|
| 1 | Fahrzeugluftreifen |
| 2 | Laufstreifenprofil |
| 3 | Schulterprofilblockreihe |
| 4 | Umfangsrille |
| 5 | Mittenprofilband |
| 6 | Umfangsrille |
| 7 | Schulterprofilblockreihe |
| 8 | Profilblockreihe |
| 9 | Profilrippe |
| 10 | Profilblockreihe |
| 11 | Profilblockelement |
| 12 | Profilblockelement |
| 13 | Profilblockelement |
| 14 | Profilblockelement |
| 15 | Querrille |
| 16 | Querrille |
| 17 | Querrille |
| 18 | Querrille |
| 19 | Querrille |
| 20 | Entkopplungsspalt |
| 21 | Feineinschnittgitter |
| 22 | Feineinschnittgitter |
| 23 | Feineinschnitt |
| 24 | Feineinschnitt |
| 25 | Feineinschnitt |
| 26 | Feineinschnitt |
| 27 | Profilblockauschnittselement |
| 28 | Profilblockausschnittselement |
| 29 | Feineinschnittgitter |
| 30 | Feineinschnitt |
| 31 | Feineinschnitt |
| 32 | Profilblockauschnittselement |
| 33 | Rahmen |

34  Rahmen
35  Rahmen
36  Rahmen
37  Rahmen
38  Querrille

**Patentansprüche**

**1.** Laufstreifenprofil eines Fahrzeugluftreifens - insbesondere eines Winterreifens - mit wenigstens einer über den Umfang des Fahrzeugluftreifens erstreckten Profilblockreihe (8,10) mit in Umfangsrichtung U hintereinander angeordneten, jeweils durch Querrillen (16,17) voneinander getrennten Profilblockelementen (12,13), mit einem in der radial äußeren Oberfläche von Profilblockelementen (12,13) der Profilblockreihe (8,10) ausgebildeten gitterförmigen Feineinschnittsystem (22),
**dadurch gekennnzeichnet,**
**dass** ein oder mehrere der Profilblockelemente (12,13) einer Profilblockreihe (8,10) in ihrer radial äußeren Oberfläche mit mehreren - insbesondere mit zwei - in Umfangsrichtung U hintereinander angeordneten und von einander beabstandeten gitterförmigen Feineinschnittsystemen (22) ausgebildet sind, mit jeweils einer in Umfangsrichtung U zwischen den hintereinander angeordneten gitterförmigen Feineinschnittsystemen (22) ausgebildeten Zone (36), die sich axial längs der Erstreckung der gitterförmigen Feineinschnittsysteme (22) über die gesamte axiale Erstreckung der gitterförmigen Feineinschnittsysteme (22) im Profilblockelement (12,13) über einen in Umfangsrichtung U gemessenen Abstand $w_3$ mit $w_3 > 0$ mm hin erstrecken, der frei von Feineinschnitten ausgebildet ist.

**2.** Laufstreifenprofil gemäß den Merkmalen von Anspruch 1,
wobei die von einander beabstandeten gitterförmigen Feineinschnittsysteme (22) aus mehreren geradlinigen, zu einander parallelen ersten Feineinschnitten (25) und aus diese ersten Feineinschnitte (25) mit einander verbindenden zweiten Feineinschnitten (26) ausgebildet ist, wobei die geradlinigen, parallelen ersten Feineinschnitte (25) in ihrer Ausrichtung mit ihrer größten Richtungskomponente in Umfangsrichtung U des Fahrzeugluftreifens ausgebildet sind.

**3.** Laufstreifenprofil gemäß den Merkmalen von Anspruch 2,
wobei zwei in Erstreckungsrichtung der ersten Feineinschnitte (25) des Profilblockelementes (12,13) gesehen benachbarte zweite Feineinschnitte (26) in Erstreckungsrichtung der ersten Feineinschnitte (25) gemessen jeweils einen Abstand $k_2$ zu einander aufweisen.

**4.** Laufstreifenprofil gemäß den Merkmalen von Anspruch 2,
wobei für $w_3$ gilt: $(1{,}15\ k_2) \leq w_3 \leq (1{,}5\ k_2)$.

**5.** Laufstreifenprofil gemäß den Merkmalen von einem oder mehreren der vorangegangenen Ansprüche,
mit zwei in der radial äußeren Oberfläche des Profilblockelements (12,13) ausgebildeten Zonen (35,37), die sich axial längs der Erstreckung des gitterförmigen Feineinschnittsystems (22) über die gesamte axiale Erstreckung des gitterförmigen Feineinschnittsystems (22) im Profilblockelement (12,13) und in Umfangsrichtung U zwischen jeweils einer der beiden das Profilblockelement (12,13) in Umfangsrichtung (U) zu einer Querrille (16,17) hin begrenzenden Profilblockelementflanke und dem gitterförmigen Feineinschnittsystem (22) über einen in Umfangsrichtung U gemessenen Abstand $w_2$ mit $w_2 > 0$ mm hin erstrecken, der frei von Feineinschnitten ausgebildet ist.

**6.** Laufstreifenprofil gemäß den Merkmalen von Anspruch 3,
wobei für $w_2$ gilt $(1{,}15\ k_z) \leq w_2 \leq (1{,}5\ k_2)$.

**7.** Laufstreifenprofil gemäß den Merkmalen von einem oder mehreren der vorangegangenen Ansprüche,
wobei die zweiten Feineinschnitte (26) in ihrem Erstreckungsbereich zwischen jeweils zwei benachbarten ersten Feineinschnitten (25) geradlinig parallel zueinander verlaufend ausgebildet sind

**8.** Laufstreifenprofil gemäß den Merkmalen von einem oder mehreren der vorangegangenen Ansprüche,
wobei die zweiten Feineinschnitte (26) zumindest in ihrem Erstreckungsbereich zwischen jeweils benachbarten ersten Feineinschnitten (25) in ihrer Ausrichtung ihre größte Richtungskomponente in axialer Richtung des Fahrzeugluftreifens aufweisen.

**9.** Laufstreifenprofil gemäß den Merkmalen von einem oder mehreren der vorangegangenen Ansprüche,

wobei die zweiten Feineinschnitte (26) in ihrer Schnittstelle mit einem ersten Feineinschnitt (25) jeweils mit einem Versatz in Erstreckungsrichtung des ersten Feineinschnitts (26) ausgebildet sind.

**Claims**

1. A tread profile of a pneumatic vehicle tyre - in particular a winter tyre - comprising at least one profile block row (8, 10) which extends over the circumference of the pneumatic vehicle tyre and comprises profile block elements (12, 13) which are arranged one behind the other in the circumferential direction U and are each separated from one another by transverse grooves (16, 17), with a grid-shaped sipe system (22) formed in the radially outer surface of profile block elements (12, 13) of the profile block row (8, 10), **characterized in that** one or more of the profile block elements (12, 13) of a profile block row (8, 10) are formed in their radially outer surface with a plurality - in particular with two - spaced-apart grid-shaped sipe systems (22) arranged one behind the other in the circumferential direction U, with in each case a zone (36) formed in the circumferential direction U between the grid-shaped sipe systems (22) arranged one behind the other, which zone extends axially along the extent of the grid-shaped sipe systems (22) over the entire axial extent of the grid-shaped sipe systems (22) in the profile block element (12, 13) over a spacing $w_3$, measured in the circumferential direction U, where $w_3 > 0$ mm, which spacing is formed free from sipes.

2. Tread profile according to the features of Claim 1, wherein the spaced-apart grid-shaped sipe systems (22) are formed from a plurality of rectilinear mutually parallel first sipes (25) and from second sipes (26) which connect these first sipes (25) to one another, wherein the rectilinear, parallel first sipes (25) are formed in their orientation with their greatest direction component in the circumferential direction (U) of the pneumatic vehicle tyre.

3. Tread profile according to the features of Claim 2, wherein two adjacent second sipes (26), as viewed in the direction of extent of the first sipes (25) of the profile block element (12, 13), in each case have a spacing $k_2$ from one another as measured in the direction of extent of the first sipes (25).

4. Tread profile according to the features of Claim 2, wherein the following holds for $w_3$: $(1.15\ k_2) \leq w_3 \leq (1.5\ k_2)$.

5. Tread profile according to the features of one or more of the preceding claims, comprising two zones (35, 37) formed in the radially outer surface of the profile block element (12, 13), which zones extend axially along the extent of the grid-shaped sipe system (22) over the entire axial extent of the grid-shaped sipe system (22) in the profile block element (12, 13) and, in the circumferential direction U, between in each case one of the two profile block element flanks, which delimit the profile block element (12, 13) in the circumferential direction (U) with respect to a transverse groove (16, 17), and the grid-shaped sipe system (22) over a spacing $w_2$, measured in the circumferential direction U, where $w_2 > 0$, which spacing is formed free from sipes.

6. Tread profile according to the features of Claim 3, wherein the following holds for $w_2$: $(1.15\ k_2) \leq w_2 \leq (1.5\ k_2)$.

7. Tread profile according to the features of one or more of the preceding claims, wherein the second sipes (26) are designed to extend rectilinearly parallel to one another in their region of extent between in each case two adjacent first sipes (25).

8. Tread profile according to the features of one or more of the preceding claims, wherein the second sipes (26), at least in their region of extent between in each case adjacent first sipes (25), have in their orientation their greatest direction component in the axial direction of the pneumatic vehicle tyre.

9. Tread profile according to the features of one or more of the preceding claims, wherein, at their interface with a first sipe (25), the second sipes (26) are in each case formed with an offset in the direction of extent of the first sipe (25).

**Revendications**

1. Profil de bande de roulement pour bandage pneumatique de roue de véhicule, en particulier pour bandage d'hiver, présentant au moins une rangée (8, 10) de blocs profilés qui s'étend sur la périphérie du bandage pneumatique de roue de véhicule et qui présente des éléments (12, 13) de bloc profilé séparés les uns des autres par des rainures transversales (16, 17) et disposés les uns derrière les autres dans la direction périphérique U, ainsi qu'un système (22) de fines entailles en forme de grille formé dans la surface radiale extérieure d'éléments (12, 13) de blocs profilés de la rangée (8, 10) de blocs profilés, **caractérisé en ce que**
un ou plusieurs des éléments (12, 13) de bloc profilé d'une rangée (8, 10) de blocs profilés sont configurés dans leur surface radialement extérieure avec plusieurs et en particulier deux systèmes (22) de fines entailles en forme de grille disposés les uns derrière les autres dans la direction périphérique U et situés à distance mutuelle, avec entre les systèmes (22) de fines entailles en forme de grille disposés les uns derrière les autres une zone (36) formée dans la direction périphérique U et s'étendant axialement le long de l'extension des systèmes (22) de fines entailles en forme de grille sur toute l'extension axiale des systèmes (22) de fines entailles en forme de grille dans l'élément (12, 13) de bloc profilé sur une distance $w_3$, mesurée dans la direction périphérique U, avec $w_3 > 0$ mm, et configurée sans fines entailles.

2. Profil de bande de roulement selon les caractéristiques de la revendication 1, dans lequel les systèmes (22) de fines entailles en forme de grille disposés à distance mutuelle sont formés de plusieurs premières fines entailles (25) parallèles les unes aux autres et rectilignes et de deuxièmes fines entailles (26) qui relient les unes aux autres ces premières fines entailles (25), la plus grande composante directionnelle de l'orientation des premières fines entailles (25) parallèles et rectilignes étant située dans la direction périphérique U du bandage pneumatique de roue de véhicule.

3. Profil de bande de roulement selon les caractéristiques de la revendication 2, dans lequel deux deuxièmes fines entailles (26) voisines l'une de l'autre dans la direction d'extension des premières fines entailles (25) de l'élément (12, 13) de bloc profilé présentent une distance mutuelle $k_2$ dans la direction d'extension des premières fines entailles (25).

4. Profil de bande de roulement selon les caractéristiques de la revendication 2, dans lequel $w_3$ vérifie la relation : $(1{,}15\ k_2) \le w_3 \le (1{,}5\ k_2)$.

5. Profil de bande de roulement selon les caractéristiques d'une ou plusieurs des revendications précédentes, présentant dans la surface radialement extérieure de l'élément (12, 13) de bloc profilé des zones (35, 37) sans de fines entailles qui s'étendent axialement sur une distance $w_2$, $w_2 > 0$ mm, mesurée dans la direction périphérique U, le long de l'extension du système (22) de fines entailles en forme de grille sur toute l'extension axiale du système (22) de fines entailles en forme de grille de l'élément (12, 13) de bloc profilé et dans la direction périphérique entre l'un des deux flancs d'élément de bloc profilé qui délimitent l'élément (12, 13) de bloc profilé dans la direction périphérique (U) en direction d'une rainure transversale (16, 17) et le système (22) de fines entailles en forme de grille.

6. Profil de bande de roulement selon les caractéristiques de la revendication 3, dans laquelle $w_2$ vérifie la relation $(1{,}15\ k_2) \le w_2 \le (1{,}5\ k_2)$.

7. Profil de bande de roulement selon les caractéristiques d'une ou plusieurs des revendications précédentes, dans lequel les deuxièmes fines entailles (26) sont formées en lignes droites parallèles les unes les autres dans la partie de leur extension située entre deux premières fines entailles (25) voisines.

8. Profil de bande de roulement selon les caractéristiques d'une ou plusieurs des revendications précédentes, dans lequel au moins dans la partie de leur extension située entre deux premières fines entailles (25) voisines, l'orientation de la plus grande composante directionnelle des deuxièmes fines entailles (26) présentent est dans la direction axiale du bandage pneumatique de roue de véhicule.

9. Profil de bande de roulement selon les caractéristiques d'une ou plusieurs des revendications précédentes, dans lequel l'interface de chacune des deuxièmes fines entailles (26) avec une première fine entaille (25) est décalée dans la direction d'extension de la première fine entaille (26).

# FIG. 1

**FIG. 2**

EP 2 165 858 B1

EP 2 165 858 B1

# FIG. 3a

# FIG. 4a

# FIG. 3b

# FIG. 4b

**EP 2 165 858 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19829038 C2

- EP 0718125 A